# EUROPÄISCHE PATENTANMELDUNG

(11) **EP 4 091 853 A1**
(43) Veröffentlichungstag der Anmeldung: **23.11.2022**
(21) Anmeldenummer: 22173427.0
(22) Anmeldetag: 16.05.2022
(51) Int. Cl.: B60K 15/05

(54) **VORRICHTUNG ZUM ÖFFNEN UND VERSCHLIESSEN EINER LADEDOSE**

(30) Priorität: 19.05.2021 DE 102021112936
(71) Anmelder: Lisa Dräxlmaier GmbH, 84137 Vilsbiburg (DE)
(72) Erfinder: Wimmer, Stefan, 84098 Hohenthann (DE); Gielhammer, Veronika, 84137 Vilsbiburg (DE); Livk, Uros, 85748 Garching (DE); Reil, Benjamin, 85276 Pfaffenhofen (DE); Will, Daniel, 84180 Loiching (DE)

(57) **Zusammenfassung**

Vorrichtung 100 zum Öffnen und Verschließen einer Ladedose umfassend
ein Klappenelement 101, welches mittels einer Welle 103 an einem Gehäuse der Ladedose beweglich angeordnet ist und die Welle 103 eine erste Einkerbung 109a und eine zweite Einkerbung 109b umfasst; mit einem Halteelement 102, welches an dem Klappenelement 101 mechanisch befestigt ist und einen Bolzen 107 umfasst und das Klappenelement 101 mittels der Welle 103 durch ein Bedienen des Klappenelements 101 von einer geschlossenen Position in eine geöffnete Position überführbar ist und wobei der Bolzen 107 des Halteelements 102 in der geschlossenen Position des Klappenelements 101 in der ersten Einkerbung 109a der Welle 103 eingerastet ist und in der geöffneten Position des Klappenelements 101 in der zweiten Einkerbung 109b der Welle 103 eingerastet ist.

## Beschreibung

### Technisches Gebiet

Die vorliegende Erfindung betrifft eine Vorrichtung zum Öffnen und Verschließen einer Ladedose.

### Stand der Technik

Rein elektrisch angetriebene Kraftfahrzeuge oder Plug-In-Hybridfahrzeuge weisen üblicherweise eine Ladedose auf, mit welcher ein Ladestecker zum elektrisch Aufladen einer Batterie des Fahrzeugs verbunden werden kann. Derartige Ladedosen sind meistens hinter verschwenkbaren Klappen der Fahrzeuge verborgen, um die stromführenden Teile, welche sich in der Ladedose befinden, vor Schmutz oder Flüssigkeit zu schützen. Sobald ein Ladestecker in die Ladedose gesteckt werden soll, muss eine solche Klappe geöffnet werden. Das Öffnen der Klappe erfolgt meist manuell mittels einem Druckknopf. Ein Schließen der Klappe erfolgt ebenfalls manuell.

### Beschreibung der Erfindung

Eine Aufgabe der Erfindung ist es daher, unter Einsatz konstruktiv möglichst einfacher Mittel eine einfache Handhabung bei einem Öffnen und Schließen einer Klappe bei einer Ladedose bereitzustellen.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Ein Aspekt der Erfindung betrifft eine Vorrichtung zum Öffnen und Verschließen einer Ladedose umfassend ein Klappenelement, welches mittels einer Welle an einem Gehäuse der Ladedose beweglich angeordnet ist und die Welle eine erste Einkerbung und eine zweite Einkerbung umfasst; ein Halteelement, welches an dem Klappenelement mechanisch befestigt ist und einen Bolzen umfasst und das Klappenelement mittels der Welle von einer geschlossenen Position in eine geöffnete Position überführbar ist und wobei der Bolzen des Halteelements in der geschlossenen Position des Klappenelements in der ersten Einkerbung der Welle eingerastet ist und in der geöffneten Position des Klappenelements in der zweiten Einkerbung der Welle eingerastet ist.

Die Ladedose kann an einem elektrisch betriebenen Fahrzeug angeordnet werden. Das Klappenelement kann eine Abdeckung der Ladedose sein. Die Ladedose dient als Ladeschnittstelle zum elektrischen Laden einer Hochvolt-Batterie des elektrisch betriebenen Fahrzeugs. Wenn die Ladedose verschlossen ist, deckt das Klappenelement elektrische Komponenten, welche in dem Gehäuse der Ladedose angeordnet sind, wie beispielsweise Kontaktpins, ab und schützt diese somit vor Spritzwasser und Schmutz. Zum elektrischen Laden einer Batterie des elektrisch betriebenen Fahrzeugs wird in die Ladedose ein Ladestecker hineingesteckt und elektrisch miteinander verbunden. Hierfür muss das Klappenelement geöffnet werden.

Das Klappenelement ist mittels der Welle an dem Gehäuse der Ladedose beweglich angeordnet. Die Welle ist eine rotatorische Gelenkachse. Das Klappenelement ist mit der Welle mittels Federelementen befestigt. Beispielsweise können als Federelemente Torsionsfedern auf der Welle montiert sein und an dem Klappenelement und an dem Gehäuse befestigt sein. Das Klappenelement kann beispielsweise eine U-förmige Halterung umfassen. In der U-förmigen Halterung kann die Welle eingelegt und mit dem Klappenelement formschlüssig befestigt sein. Das Klappenelement kann einen Griff umfassen, mit welcher das Klappenelement in eine geöffnete Position gebracht werden kann. Durch Betätigen des Griffs durch einen Bediener wird die Klappe manuell geöffnet und der Bolzen wird von der ersten Einkerbung in die zweite Einkerbung überführt.

Die Welle umfasst einen runden Querschnitt. Die Welle kann einen Flansch umfassen. Der Flansch kann ringförmig ausgebildet sein und auf die Welle aufgesteckt sein und die erste Einkerbung und die zweite Einkerbung umfassen.

Das Halteelement umfasst den Bolzen. Das Halteelement umfasst weiterhin einen Stift, welcher in eine Aussparung des Klappenelements hineinragt. Der Bolzen ist in der geschlossenen Position des Klappenelements in der ersten Einkerbung der Welle eingerastet und in der geöffneten Position des Klappenelements in der zweiten Einkerbung der Welle eingerastet. Durch Betätigen des Griffs des Klappenelements durch einen Bediener wird das Klappenelement manuell geöffnet und der Bolzen wird von der ersten Einkerbung in die zweite Einkerbung überführt.

Bei dem Überführen des Bolzens von der ersten Einkerbung in die zweite Einkerbung wird das Klappenelement durch den Stift entsprechend von der geschlossenen Position in die geöffnete Position gebracht.

Durch den runden Querschnitt der Welle kann das Überführen des Bolzens von der ersten Einkerbung in die zweite Einkerbung erleichtert werden.

In einer Ausführungsform umfasst die Welle ein Rückstellelement, welches in der geöffneten Position des Klappenelements eine Rückstellkraft auf das Klappenelement ausübt, wobei das Klappenelement mittels der Rückstellkraft von der geöffneten Position in die geschlossene Position bewegbar ist. Das Rückstellelement kann beispielsweise eine Feder sein und zusätzlich als Befestigungselement des Klappenelements an der Welle dienen. Die Welle kann auch mehrere Rückstellelemente umfassen.

In einer Ausführungsform umfasst das Klappenelement ein Rückstellelement, welches in der geöffneten Position des Klappenelements eine Rückstellkraft auf das Klappenelement ausübt, wobei das Klappenelement mittels der Rückstellkraft von der geöffneten Position in die geschlossene Position bewegbar ist.

In einer Ausführungsform ist das Halteelement mit mindestens einem Federelement an dem Klappenelement mechanisch befestigt. Das Federelement kann zur Befestigung des Halteelement an dem Klappenelement dienen. Zusätzlich kann es als Rückstellelement dienen.

Das Halteelement kann einen Vorsprung umfassen. Der Vorsprung ist an dem Halteelement so angeordnet, dass der Vorsprung bei einem in der Ladedose eingesteckten Ladestecker durch den Ladestecker berührt ist und durch den eingesteckten Ladestecker in dessen Position gehalten wird. Sobald der Ladestecker aus der Ladedose herausgezogen wird, löst sich die Position des Vorsprungs und der Bolzen des Halteelements wird durch die Rückstellkraft des Rückstellelements des Klappenelements von der zweiten Einkerbung in die erste Einkerbung überführt.

Durch das Rückstellelement, welches zusätzlich die Welle mit dem Klappenelement mechanisch verbinden kann, kann das Klappenelement wieder automatisch geschlossen werden. Durch den Vorsprung ist kein manuelles Schließen des Klappenelements nötig, denn das Schließen erfolgt automatisch, sobald der Ladestecker aus der Ladedose herausgezogen wird. Alternativ kann das Klappenelement über den Griff manuell geschlossen werden.

In einer Ausführungsform ist an dem Klappenelement ein Dämpfungselement angeordnet, welches eine Bewegung des Klappenelements während dem Überführen von der geöffneten Position in die geschlossene Position dämpft. Das Dämpfungselement ermöglicht ein geräuscharmes Schließen des Klappenelements.

In einer Ausführungsform umfasst das Klappenelement einen Aktuator, welcher mittels einer Steuereinheit ansteuerbar ist. Mittels des Aktuators kann das Klappenelement automatisch geöffnet werden. Der Aktuator ist mittels einer Steuereinheit ansteuerbar.

In einer Ausführungsform umfasst die Welle weitere Einkerbungen, welche verteilt um die Welle angeordnet sind und der Bolzen in die weiteren Einkerbungen einrastbar ist. Durch die weiteren Einkerbungen können weitere verschiedene Positionen zwischen der geöffneten Position und der geschlossenen Positionen realisiert werden.

In einer weiteren Ausführungsform ist die Welle einstückig ausgebildet. Beispielsweise kann die Welle mittels Spritzgussverfahren hergestellt werden. Die Welle kann in dem Bereich der Einkerbungen einen anderen Querschnitt aufweisen, als außerhalb des Bereichs der Einkerbungen.

Alternativ kann die Well mehrteilig ausgebildet sein. Beispielsweise kann auf die Welle der Flansch aufgesteckt sein, welcher die erste Einkerbung und die zweite Einkerbung umfasst.

### Kurze Figurenbeschreibung

Nachfolgend wird ein vorteilhaftes Ausführungsbeispiel der Erfindung unter Bezugnahme auf die begleitenden Figuren erläutert. Es zeigen:
- Figur 1: eine Explosionsdarstellung der Vorrichtung;
- Figur 2: eine Schnittdarstellung der Vorrichtung in einer geschlossenen Position eines Klappenelements und
- Figur 3: eine Schnittdarstellung der Vorrichtung in einer geöffneten Position des Klappenelements.
Die Figuren sind lediglich schematische Darstellungen und dienen nur der Erläuterung der Erfindung. Gleiche oder gleichwirkende Elemente sind durchgängig mit den gleichen Bezugszeichen versehen.

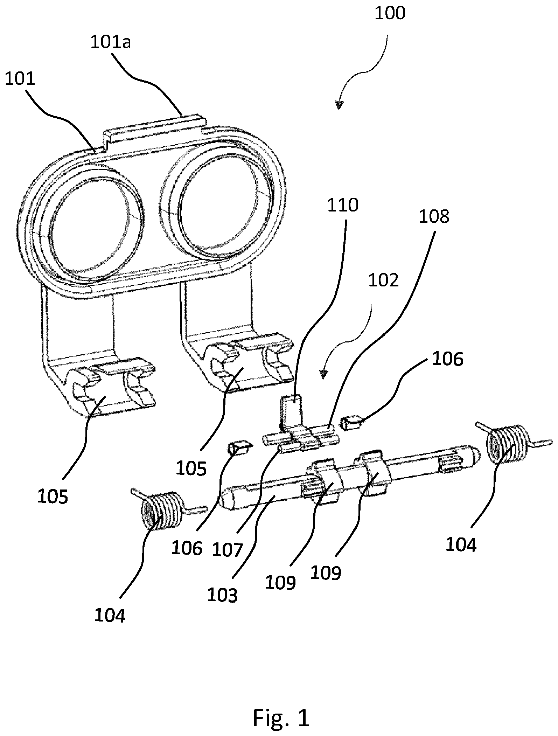

Die Figur 1 zeigt eine Explosionsdarstellung der Vorrichtung 100 zum Öffnen und Verschließen einer Ladedose. Die Vorrichtung umfasst eine Ladedosenabdeckung 101 als das Klappenelement. Die Ladedosenabdeckung 101 ist mittels einer Welle 103 an der Ladedose drehbar gelagert angeordnet. Die Welle 103 ist in einer Aussparung 105 der Ladedosenabdeckung 101 angeordnet. Die Ladedosenabdeckung 101 ist mittels Drehfedern 104 an einem Gehäuse der Ladedose befestigt. Die Drehfedern 104 sind auf der Welle 103 aufgesteckt. Die Drehfedern 104 dienen als Befestigung der Ladedosenabdeckung 101 an dem Gehäuse der Ladedose und zusätzlich als Rückstellelemente, wenn die Ladedosenabdeckung 101 von einer geöffneten Position in eine geschlossene Position gebracht wird.

Des Weiteren umfasst die Vorrichtung ein Halteelement 102, welches mittels Drehfedern 106 an der Ladedosenabdeckung 101 befestigt ist. Die Drehfedern 106 sind auf das Halteelement 102 aufgesteckt. In einem weiteren Ausführungsbeispiel kann das Halteelement 102 über andere Befestigungsmethoden und Befestigungsmittel an der Ladedosenabdeckung 101 befestigt werden. Das Halteelement umfasst einen Mitnahmestift 108 und einen Bolzen 107. Die Welle 103 umfasst in definierten Bereichen einen vergrößerten Querschnitt 109. Insbesondere umfasst die Welle 103 in den Bereichen einen vergrößerten Querschnitt 109, in welchen Einkerbungen vorgesehen sind.

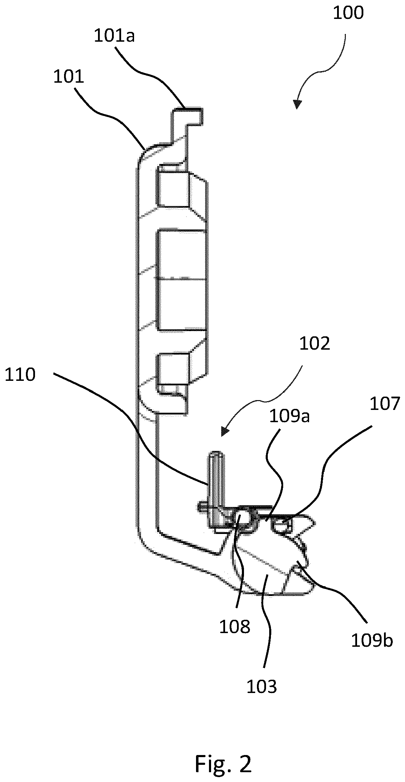

Die Figur 2 zeigt eine Schnittdarstellung der Vorrichtung 100 in einer geschlossenen Position der Ladedosenabdeckung 101 als das Klappenelement. In der geschlossenen Position der Ladedosenabdeckung 101 deckt die Ladedosenabdeckung 101 eine Ladedose ab, sodass die elektronischen Komponenten der Ladedose vor Schmutz und Spritzwasser geschützt sind. Der vergrößerte Querschnitt 109 der Welle 103 umfasst eine erste Einkerbung 109a und eine zweite Einkerbung 109b. Der Bolzen 107 ist in der ersten Einkerbung 109a eingerastet.

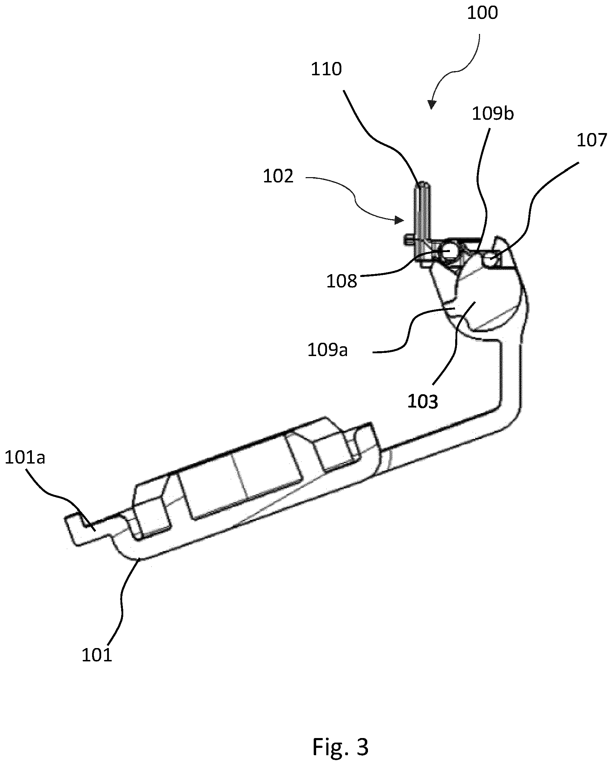

Die Figur 3 zeigt eine Schnittdarstellung der Vorrichtung 100 in einer geöffneten Position der Ladedosenabdeckung 101 als das Klappenelement. In der geöffneten Position der Ladedosenabdeckung 101 kann in der Ladedose ein Ladestecker eingesteckt sein. Die Ladedosenabdeckung 101 umfasst einen Griff 101a womit die Ladedosenabdeckung manuell geöffnet werden kann.

Während dem manuellen Öffnen der Ladedosenabdeckung 101 wird durch den Mitnahmestift 108 das Halteelement 102 ebenfalls bewegt, sodass sich der Bolzen 107 aus der ersten Einkerbung 109a heraus bewegt. Durch den runden Querschnitt der Welle 103 gleitet der Bolzen von der ersten Einkerbung 109a in die zweite Einkerbung 109b und rastet in der zweiten Einkerbung 109b ein. Die Drehfedern 104, 106 werden durch das Öffnen der Ladedosenabdeckung 101 gespannt. In der geöffneten Position ist der Bolzen 107 in der zweiten Einkerbung 109b eingerastet. Dadurch wird die Ladedosenabdeckung 101 automatisch in der geöffneten Position gehalten. Durch die runde Kontur des vergrößerten Querschnitts kann der Bolzen besonders schnell und ungehindert von der ersten Einkerbung 109a in die zweite Einkerbung 109 gelangen.

Weiterhin umfasst das Halteelement 102 einen Vorsprung 110. Der Vorsprung 110 ist von einem Ladestecker berührt, wenn der Ladestecker (in Fig. 3 nicht gezeigt) in der Ladedose eingesteckt ist. Der Vorsprung 110 ist in seiner äußeren Form und Abmessung derart ausgestaltet, dass die Ladedosenabdeckung 101 durch ein Entfernen des Ladesteckers automatisch geschlossen wird.

Um die Ladedosenabdeckung 101 wieder zu schließen kann das Halteelement 102 manuell oder während einem Entfernen des Ladesteckers durch den Ladestecker derart betätigt werden, sodass der Bolzen 107 aus der zweiten Einkerbung 109b herausgleitet. Hierfür muss ein kleiner Widerstand, welcher sich durch die Form und Abmessungen der zweiten Einkerbung 109b ergibt, überwunden werden. Beispielsweise kann der Vorsprung 110 des Halteelements 102 in dem Bereich, in welchem der Ladestecker den Vorsprung 110 berührt, eine Wölbung aufweisen, sodass dadurch der Widerstand überwunden werden kann.

Alternativ oder zusätzlich kann zum Schließen der Ladedosenabdeckung 101 der Griff 101a manuell betätigt werden, indem der Griff 101a leicht in Richtung der Ladedose gedrückt wird. Dadurch wird kann der Widerstand überwunden werden. Die gespannten Drehfedern 104, 106 erzeugen durch das Öffnen der Ladedosenabdeckung 101 eine Rückstellkraft. Mittels der Rückstellkraft und des runden Querschnitts der Welle 103 gleitet der Bolzen 107 wieder automatisch nach dem Betätigen des Halteelements 102 aus der zweiten Einkerbung 109b heraus und rastet in der ersten Einkerbung 109a ein. Die Ladedosenabdeckung 101 ist somit wieder in der geschlossenen Position.

### BEZUGSZEICHENLISTE

- 100: Vorrichtung
- 101: Ladedosenabdeckung
- 101a: Griff
- 102: Haltelement
- 103: Welle
- 104: Drehfeder
- 105: Aussparung
- 106: Drehfeder
- 107: Bolzen
- 108: Mitnahmestift
- 109: vergrößerter Querschnitt
- 109a: erste Einkerbung
- 109b: zweite Einkerbung
- 110: Vorsprung

## Patentansprüche

1. Vorrichtung (100) zum Öffnen und Verschließen einer Ladedose umfassend
ein Klappenelement (101), welches mittels einer Welle (103) an einem Gehäuse der Ladedose beweglich angeordnet ist und die Welle (103) eine erste Einkerbung (109a) und eine zweite Einkerbung (109b) umfasst;
ein Halteelement (102), welches an dem Klappenelement (101) mechanisch befestigt ist und einen Bolzen (107) umfasst;
das Klappenelement (101) mittels der Welle (103) durch ein Bedienen des Klappenelements (101) von einer geschlossenen Position in eine geöffnete Position überführbar ist und
wobei der Bolzen (107) des Halteelements (102) in der geschlossenen Position des Klappenelements (101) in der ersten Einkerbung (109a) der Welle (103) eingerastet ist und in der geöffneten Position des Klappenelements (101) in der zweiten Einkerbung (109b) der Welle (103) eingerastet ist.

2. Vorrichtung (100) nach Anspruch 1, wobei die Welle (103) ein Rückstellelement (104) umfasst, welches in der geöffneten Position des Klappenelements (101) eine Rückstellkraft auf das Klappenelement (101) ausübt, wobei das Klappenelement (101) mittels der Rückstellkraft von der geöffneten Position in die geschlossene Position bewegbar ist.

3. Vorrichtung (100) nach einem der vorhergehenden Ansprüche, wobei das Klappenelement (101) ein Rückstellelement (106) umfasst, welches in der geöffneten Position des Klappenelements(101) eine Rückstellkraft auf das Klappenelement (101) ausübt, wobei das Klappenelement (101) mittels der Rückstellkraft von der geöffneten Position in die geschlossene Position bewegbar ist.

4. Vorrichtung (100) nach einem der vorhergehenden Ansprüche, wobei das Halteelement (103) mit mindestens einem Federelement (106) an dem Klappenelement (101) mechanisch befestigt ist.

5. Vorrichtung (100) nach einem der vorhergehenden Ansprüche, wobei an dem Klappenelement (101) ein Dämpfungselement angeordnet ist, welches eine Bewegung des Klappenelements (101) während dem Überführen von der geöffneten Position in die geschlossene Position dämpft.

6. Vorrichtung (100) nach einem der vorhergehenden Ansprüche, wobei das Klappenelement (101) einen Aktuator umfasst, welcher mittels einer Steuereinheit ansteuerbar ist.

7. Vorrichtung (100) nach einem der vorhergehenden Ansprüche, wobei die Welle (103) weitere Einkerbungen umfasst, welche verteilt um die Welle (103) angeordnet sind und der Bolzen (107) in die weiteren Einkerbungen einrastbar ist.

8. Vorrichtung nach einem der vorhergehenden Ansprüche, wobei die Welle (103) einstückig ausgebildet ist.
